# EUROPÄISCHE PATENTSCHRIFT

(11) **EP 4 620 708 B1**
(45) Veröffentlichungstag und Bekanntmachung des Hinweises auf die Patenterteilung: **18.03.2026**
(21) Anmeldenummer: 25161013.5
(22) Anmeldetag: 28.02.2025
(51) Int. Cl.: B60H 1/00, B60H 1/22, F24H 6/00, F16L 5/00, F16L 5/02, F16L 41/02, F24D 19/08, F24H 1/00, F24H 9/06, F24H 9/16

(54) **HEIZSYSTEM EINES FAHRZEUGS MIT EINER BODENDURCHFÜHRUNG**
HEATING SYSTEM OF A VEHICLE HAVING A FLOOR FEED-THROUGH
SYSTÈME DE CHAUFFAGE D'UN VÉHICULE COMPRENANT UNE TRAVERSÉE DE SOL

(30) Priorität: 20.03.2024 DE 102024107976
(43) Veröffentlichungstag der Anmeldung: 24.09.2025
(73) Patentinhaber: Truma Gerätetechnik GmbH & Co. KG, 85640 Putzbrunn (DE)
(72) Erfinder: Mettenleiter, Andreas, 84051 Essenbach (DE)
(74) Vertreter: Patentanwälte Ruff, Wilhelm, Beier, Dauster & Partner mbB

(56) Entgegenhaltungen:
- CN-A- 111 828 762
- FR-A- 1 376 233
- US-A1- 2023 054 946
- US-B1- 6 584 795

## Beschreibung

Die Erfindung betrifft ein Heizsystem für ein Fahrzeug, insbesondere ein Caravan-Fahrzeug, mit einer Wasserbaugruppe zur Temperierung von Brauchwasser, die einen mit einer Belüftungseinrichtung versehenen Wassertank aufweist, wobei die Belüftungseinrichtung eine in fahrzeugseitig montiertem Zustand durch den Fahrzeugboden zu einer Fahrzeugumgebung nach außen geführte Belüftungsleitung aufweist, sowie mit einer Drainageleitung, die in fahrzeugseitig montiertem Zustand durch einen Durchtritt in dem Fahrzeugboden zu der Fahrzeugumgebung nach außen hindurchgeführt ist.

Aus der DE 10 2021 005 383 A1 ist ein Heizsystem für ein Caravan-Fahrzeug bekannt, das sowohl zum Erwärmen von Raumluft innerhalb des Caravan-Fahrzeugs als auch zum Erwärmen von Brauchwasser ausgebildet ist.

Die DE 10 2017 119 077 A1 offenbart ein Heizgerät für ein Fahrzeug, das zum Erwärmen von Raumluft für ein Fahrzeuginneres vorgesehen ist. Das Heizgerät weist ein Gehäuse auf, in dem eine Brennerkammerbaugruppe untergebracht ist, die mit Verbrennungsluft und mit Brennstoff gespeist wird. Zudem ist ein Wärmetauscherbereich vorhanden, der ein Wärmetauschergehäuse aufweist, das außenseitig mit Wärmeübertragungsrippen versehen ist.

Bei bekannten Heizgeräten für Caravan-Fahrzeuge müssen bestimmte Funktionsgruppen durch einen Fahrzeugboden hindurch einen Zugang zu einer Außenumgebung des Caravan-Fahrzeugs haben. Dies ist insbesondere für eine Drainageleitung zur Ableitung von Leckagen des Heizgeräts aus dem Fahrzeug oder für die Belüftung eines Wassertanks einer Wasserbaugruppe des Heizgeräts der Fall. Für jede dieser Durchleitungen durch den Fahrzeugboden hindurch ist bislang jeweils ein eigener Durchtritt durch den Fahrzeugboden vorgesehen.

Aus der US 6 584 795 B1 ist eine Klimaanlage mit einem Luftkanal, einem Klimagerät, einem Kondensatablauf und einer Bodendurchführung bekannt. Die Bodendurchführung weist ein Verbindungsstück mit einem ersten Rohr, einem zweiten Rohr und einem dritten Rohr auf, die an einer gemeinsamen Verbindungstelle miteinander verbunden sind. Das erste Rohr ist mit dem Kondensatablauf verbunden. Das zweite Rohr ist mit dem Luftkanal verbunden. Das dritte Rohr mündet in die Umgebung. Dabei können die besagten Rohre ein T-förmiges oder Y-förmiges Verbindungsstück bilden.

Aufgabe der Erfindung ist es, ein Heizsystem der eingangs genannten Art zu schaffen, das einen fahrzeugseitigen Montageaufwand reduziert.

Diese Aufgabe wird durch das Bereitstellen eines Heizsystems mit den Merkmalen des Anspruchs 1 gelöst.

Bei dem erfindungsgemäßen Heizsystem sind die Drainageleitung und die Belüftungsleitung mit einer Bodendurchführung verbunden, um Leckagen aus dem Fahrzeug auszuleiten und/oder den Wassertank zu belüften. Unter einer Leckage wird dabei eine insbesondere aufgrund eines Lecks oder einer Undichtigkeit auslaufende bzw. ausströmende Flüssigkeit verstanden. Die erfindungsgemäße Lösung reduziert den Montageaufwand für das Heizsystem an und in dem Freizeit-Fahrzeug, da lediglich noch eine einzelne Bodendurchführung für die Drainagefunktion und die Belüftungsfunktion notwendig ist. Das Heizsystem ist vorteilhaft ein Kombinationsheizsystem, das sowohl zur Erwärmung von Raumluft als auch zur Erwärmung von Brauchwasser vorgesehen ist. Das erfindungsgemäße Heizsystem kann aber auch lediglich zur Temperierung, d. h. zur Erwärmung, von Brauchwasser ausgebildet sein. Das Heizsystem wird für ein Freizeit-Fahrzeug, insbesondere ein Caravan-Fahrzeug, eingesetzt. Die Bodendurchführung weist eine Armatur mit zwei Anschlussstutzen für zwei Leitungen auf, die abliegend zu den Anschlussstutzen einen in betriebsfertig montiertem Zustand mit einer Fallrichtungskomponente ausgerichteten Ablaufkanal aufweist, wobei der Ablaufkanal einen gegenüber einem Leitungsquerschnitt eines Anschlussstutzens erweiterten Durchflussquerschnitt aufweist. Dadurch ist die Bodendurchführung auf ein gemeinsames Bauteil für zwei Leitungen konzentriert, wodurch lediglich noch ein einzelner Durchtritt im Bereich des Fahrzeugbodens benötigt wird. Dadurch, dass der Ablaufkanal einen gegenüber einem Leitungsquerschnitt eines Anschlussstutzens erweiterten Durchflussquerschnitt aufweist, ist eine unabhängige Strömungsfunktion für jede der beiden Leitungen gewährleistet. Da eine der Leitungen als Drainageleitung zur Ableitung von Flüssigkeit aus dem Heizsystem in die Fahrzeugumgebung nach außen und die andere Leitung als Belüftungsleitung für einen Wassertank einer Wasserbaugruppe des Heizsystems vorgesehen ist, ist gewährleistet, dass zeitgleich über die Belüftungsleitung Luft aus der Fahrzeugumgebung angesaugt und Flüssigkeit aus der Drainageleitung nach außen abgeleitet werden kann. Die Ausrichtung des Ablaufkanals in betriebsfertig montiertem Zustand, d. h. in einem in dem Durchtritt des Fahrzeugbodens montierten Zustand, mit einer Fallrichtungskomponente bedeutet, dass der Ablaufkanal in diesem am Fahrzeug betriebsfertig montierten Zustand relativ zum Fahrzeugboden nach unten abragt. Dabei kann er relativ zu einer Fallrichtung, d. h. zu einer Vertikalen, geneigt oder vollständig vertikal bzw. in Fahrzeughochrichtung nach unten ausgerichtet sein. Die Fallrichtungskomponente ist als Richtungsvektor zu verstehen in Bezug auf ein fahrzeugseitiges Koordinatensystem mit einer Fahrzeughochrichtung, einer Fahrzeuglängsrichtung und einer Fahrzeugquerrichtung. Die Ausrichtung des Ablaufkanals muss demzufolge mit einer Vektorkomponente in Fahrzeughochrichtung nach unten versehen sein. Zusätzlich kann eine weitere Richtungsvektorkomponente in Fahrzeugquerrichtung oder Fahrzeuglängsrichtung vorgesehen sein. Die erfindungsgemäße Lösung eignet sich für Heizsysteme von Freizeit-Fahrzeugen, besonders vorteilhaft für Caravan-Fahrzeuge in geschleppter Form (Wohnanhänger) und für mit einem Fahrantrieb versehene Caravan-Fahrzeuge, nämlich Wohnmobile. Die Armatur stellt ein einstückiges Bauteil dar, an dem sowohl die beiden Anschlussstutzen als auch der Ablaufkanal angeformt sind. Der Durchflussquerschnitt des Ablaufkanals ist größer als ein Leitungsquerschnitt eines Anschlussstutzens. Dabei kann der Ablaufkanal stufenlos oder stufenförmig erweitert sein. Der Ablaufkanal kann einen einzelnen Kanalabschnitt oder mehrere Kanalabschnitte aufweisen. Wesentlich ist lediglich, dass der gesamte Durchflussquerschnitt des Ablaufkanals größer ist als der Leitungsquerschnitt jeweils eines Anschlussstutzens. Die Armatur kann aus Kunststoff oder aus Metall, vorzugsweise in einem Spritzgussverfahren, hergestellt sein.

In weiterer Ausgestaltung der Erfindung ist die Armatur außenseitig mit wenigstens einem Befestigungsabschnitt versehen, um die Armatur an oder in einem Durchtritt eines Fahrzeugbodens zu fixieren. Der wenigstens eine Befestigungsabschnitt dient zur Positionssicherung und zur Fixierung der Armatur relativ zum Fahrzeugboden - auf einen Montagezustand bezogen. Als Ausführung eines Befestigungsabschnitts kann eine Lasche, ein Steg, ein Flansch oder auch ein Außengewinde an der Armatur vorgesehen sein. Der wenigstens eine Befestigungsabschnitt ist vorzugsweise einstückig an der Armatur angeformt. Wenn als Befestigungsabschnitt ein Außengewinde vorgesehen ist, dann wird die Armatur in den Durchtritt des Fahrzeugbodens eingeschraubt, wobei der Durchtritt entweder ein komplementäres Innengewinde aufweist oder ein solches Innengewinde beim Einschrauben der Armatur eingeschnitten wird. Die Positionssicherung der Armatur relativ zu dem Fahrzeugboden gewährleistet eine gleichbleibende Positionierung der Armatur auch im Fahrbetrieb des Caravan-Fahrzeugs. Ein Verkippen der Armatur und damit auch ein Abknicken von mit der Armatur verbundenen Schläuchen wird hierdurch zuverlässig vermieden.

In weiterer Ausgestaltung der Erfindung ist als Befestigungsabschnitt ein auf einen Rand des Durchtritts des Fahrzeugbodens aufsetzbarer Auflageflansch vorgesehen, der in aufgesetztem Zustand mittels wenigstens eines Befestigungselements, insbesondere mittels wenigstens einer Schraubverbindung, an dem Fahrzeugboden befestigbar ist. Der Auflageflansch wird vorteilhaft durch zwei zu gegenüberliegenden Seiten hin abragende Flanschstege gebildet, die einstückig an der Armatur angeformt sind. Die Flanschstege weisen jeweils ein Loch, vorzugsweise eine Bohrung, auf, durch die hindurch Schrauben geführt werden können, um die Armatur in einem Randbereich des Durchtritts des Fahrzeugbodens festzuschrauben.

In weiterer Ausgestaltung der Erfindung ist die Armatur als einstückiges Kunststoffgehäuse gestaltet. Das Kunststoffbauteil wird durch ein Armaturgehäuse aus Kunststoff gebildet, das die beiden Anschlussstutzen sowie den Ablaufkanal und vorzugsweise den wenigstens einen Befestigungsabschnitt aufweist.

In weiterer Ausgestaltung der Erfindung ist der Durchflussquerschnitt des Ablaufkanals zu einem von den Anschlussstutzen entfernten Stirnendbereich hin, insbesondere konisch, erweitert. Dadurch ergibt sich eine einfach herstellbare Erweiterung, die einen sicheren Ablauf von Flüssigkeit gewährleistet und gleichzeitig die Ansaugung von Umgebungsluft ermöglicht.

In weiterer Ausgestaltung der Erfindung weist der Ablaufkanal zwei voneinander getrennte, parallel zueinander verlaufende Kanalabschnitte auf, in die die Leitungsquerschnitte der Anschlussstutzen münden. Dabei können entweder durchgängig getrennte Strömungskanäle vorgesehen sein, die einen Übergang des Leitungsquerschnitts jedes Anschlussstutzens in den jeweiligen Strömungskanal bilden, oder die Aufteilung des Ablaufkanals in zwei voneinander getrennte Kanalabschnitte erfolgt - in Strömungsrichtung gesehen - in Abstand zu einem entsprechenden Anschlussende des jeweiligen Anschlussstutzens.

In weiterer Ausgestaltung der Erfindung sind Stirnenden der Anschlussstutzen und des Ablaufkanals jeweils mit einer umlaufenden Fase versehen. Die Fasen gewährleisten das beschädigungsfreie Aufschieben und Aufstecken flexibler Schläuche. Die jeweiligen Fasen können dabei geradlinig und/oder konvex gebogen sein, d.h. zumindest bereichsweise einen Radius aufweisen.

In weiterer Ausgestaltung der Erfindung sind ein Anschlussstutzen koaxial oder parallel zu einer Hochachse der Armatur und der andere Anschlussstutzen orthogonal zu der Hochachse ausgerichtet. In weiterer Ausgestaltung der Erfindung ist der Ablaufkanal fluchtend zu dem Anschlussstutzen ausgerichtet, der koaxial oder parallel zur Hochachse der Armatur erstreckt ist. Diese Ausgestaltungen sind besonders vorteilhaft für den Anschluss einer Belüftungsleitung eines Wassertanks und einer Drainageleitung des Heizsystems.

In weiterer Ausgestaltung der Erfindung ist ein Anschlussstutzen der Armatur, mit dem die Drainageleitung verbunden ist, in fahrzeugseitig montiertem Zustand in Hochrichtung unterhalb eines Einlasses der Drainageleitung positioniert. Dadurch ist gewährleistet, dass die Drainageleitung, insbesondere ein flexibler Drainageschlauch, in fahrzeugseitig montiertem Zustand stetig fallend verläuft, so dass eine ungewünschte Ansammlung von Flüssigkeit im Schlauch vermieden wird.

In weiterer Ausgestaltung der Erfindung ist der Wassertank in einem Gehäuse untergebracht, an dem der Einlass der Drainageleitung in einem Bodenbereich des Gehäuses montiert bzw. positioniert ist. Ein Bodenbereich des Gehäuses liegt in fahrzeugseitig und betriebsfertig montiertem Zustand höher als der zugehörige Anschlussstutzen der Armatur, ebenfalls auf den fahrzeugseitig montierten Zustand der Armatur bezogen. Der Einlass der Drainageleitung entspricht einem Ablauf aus dem Gehäuse und wird auch als Gehäuseauslass bezeichnet.

In weiterer Ausgestaltung der Erfindung sind die Drainageleitung und die Belüftungsleitung durch flexible Schläuche gebildet, deren Innendurchmesser kleiner ist als ein Außendurchmesser des jeweiligen Anschlussstutzens der Armatur. Dadurch ist bei einem Aufstecken der Schläuche auf die Anschlussstutzen ein eigenständiges Klemmen der Schläuche auf den Anschlussstutzen ermöglicht. Ergänzend können Schlauchschellen vorgesehen sein, um eine weitere Verbesserung des Halts der Schläuche auf den Anschlussstutzen zu erzielen.

In weiterer Ausgestaltung der Erfindung ist ein flexibler Schlauch auf das Stirnende des Ablaufkanals aufgesteckt, wobei ein Innendurchmesser des Schlauchs kleiner ist als ein Außendurchmesser des Stirnendes des Ablaufkanals. Vorteilhaft weist sowohl der Außenumfang des Ablaufkanals als auch der Außenumfang jedes Anschlussstutzens einen zylindrischen Durchmesser auf. Dadurch ist ein besonders gutes Aufschieben und Aufstecken der Schläuche auf die Anschlussstutzen und auf den Ablaufkanal gewährleistet.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in perspektivischer, schematischer Darstellung eine Ausführungsform eines erfindungsgemäßen Heizsystems im betriebsfertig montierten Zustand auf einem Fahrzeugboden,
- Fig. 2: das Heizsystem nach Fig. 1 in teilweise geschnittener Darstellung,
- Fig. 3: eine schematische Funktionsdarstellung des Heizsystems nach den Fig. 1 und 2,
- Fig. 4: in einer Längsschnittdarstellung eine Bodendurchführung für des Heizsystems nach den Fig. 1 bis 3,
- Fig. 5: die Bodendurchführung nach Fig. 4 in perspektivischer Darstellung,
- Fig. 6: die Bodendurchführung nach den Fig. 4 und 5 in betriebsfertig montiertem Zustand an einem Fahrzeugboden,
- Fig. 7: eine Ausführungsform der Bodendurchführung in perspektivischer, längsgeschnittener Darstellung,
- Fig. 8: die Bodendurchführung nach Fig. 7 in einem Längsschnitt und
- Fig. 9: die Bodendurchführung nach den Fig. 7 und 8 in perspektivischer Darstellung.

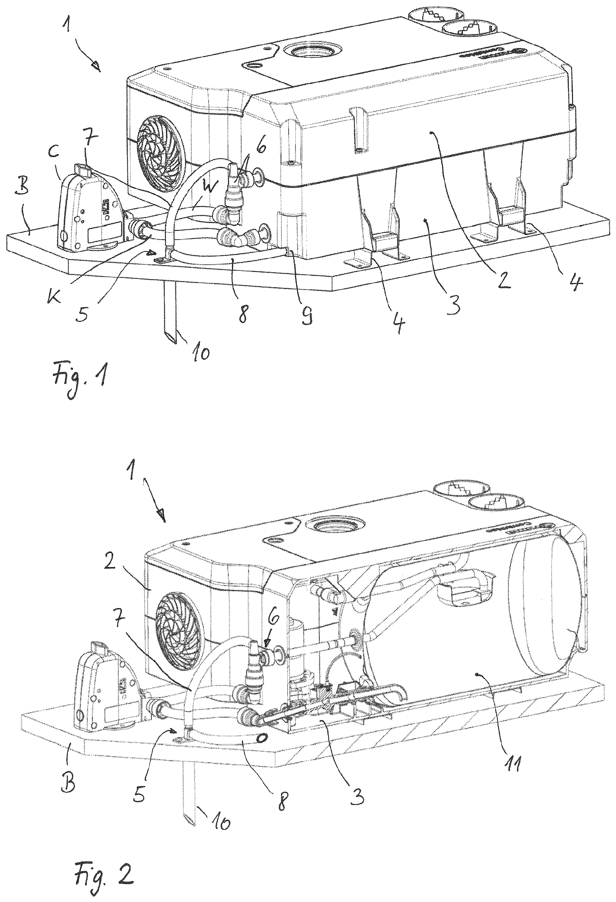

Ein Heizsystem 1 nach den Fig. 1 bis 3 ist für den Einsatz in einem Freizeitfahrzeug, vorliegend in einem angetriebenen Caravan-Fahrzeug (Wohnmobil) oder in einem geschleppten Caravan-Fahrzeug (Wohnanhänger), vorgesehen. Die Darstellungen gemäß den Fig. 1 und 2 zeigen das Heizsystem 1 in betriebsfertig montiertem Zustand auf einem Fahrzeugboden B des Freizeit-Fahrzeugs. Aus Übersichtlichkeitsgründen sind weitere Teile oder Abschnitte des Freizeit-Fahrzeugs nicht dargestellt. Der Fahrzeugboden B erstreckt sich - auf ein Fahrzeugkoordinatensystem mit einer Fahrzeughochachse, einer Fahrzeugquerachse und einer Fahrzeuglängsachse bezogen - in einer Fahrzeugebene, die durch die Fahrzeuglängsachse und die Fahrzeugquerachse aufgespannt ist. Damit ist das Heizsystem 1 in betriebsfertig montiertem Zustand etwa horizontal auf einer Oberfläche des Fahrzeugbodens B montiert.

Das Heizsystem 1 stellt ein Kombinationsheizgerät dar, das sowohl zur Erwärmung von Raumluft in einem Fahrzeuginneren des Freizeit-Fahrzeugs als auch zur Erwärmung von Brauchwasser vorgesehen ist. Das Heizsystem 1 weist somit eine nicht näher dargestellte Luftbaugruppe sowie eine anhand der Fig. 1 bis 3 erkennbare Wasserbaugruppe auf. Die Wasserbaugruppe dient - wie beschrieben - zur Erwärmung des Brauchwassers.

Bei einem nicht dargestellten Ausführungsbeispiel der Erfindung weist das Heizsystem ausschließlich eine Wasserbaugruppe auf, d. h. das Heizsystem ist nur zur Erwärmung von Brauchwasser vorgesehen.

Bei dem vorliegenden Heizsystem 1 gemäß den Fig. 1 bis 3 sind sowohl die Luftbaugruppe als auch die Wasserbaugruppe in einem gemeinsamen Gehäuse untergebracht, das eine Oberschale 2 und eine Unterschale 3 aufweist. Die Unterschale 3 des Gehäuses ist mithilfe mehrerer Sockel 4 in geringem Abstand über der Oberseite des Fahrzeugbodens B fest montiert, wie anhand der Fig. 1 gut erkennbar ist. Ein Boden der Unterschale 3 verläuft parallel in Abstand zu dem Fahrzeugboden B. Die Oberschale 2 ist auf der Unterschale 3 lösbar befestigt. Die Oberschale 2 und die Unterschale 3 sind an einer Trennebene aufeinandergesetzt, die etwa auf halber Höhe des Gehäuses parallel zu dem Fahrzeugboden B verläuft.

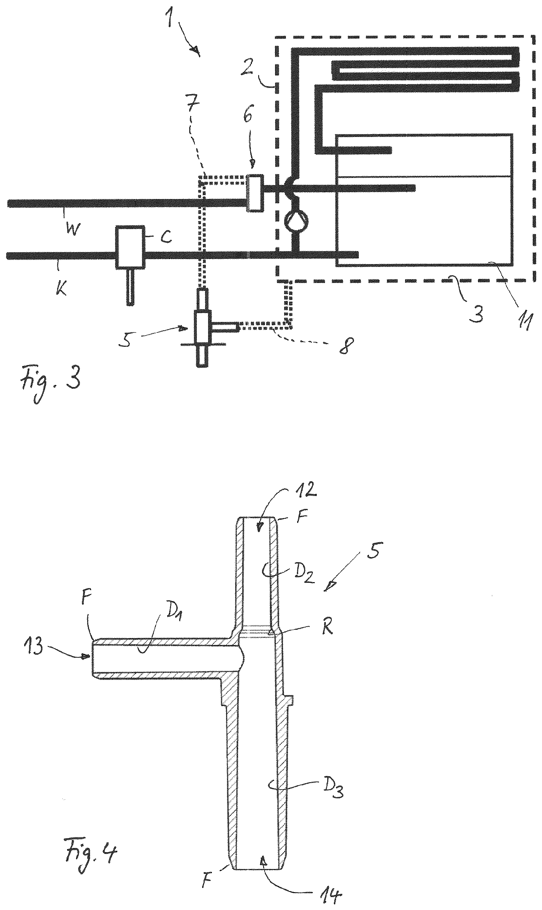

In dem Gehäuse ist ein Wassertank 11 untergebracht, dem ein nicht näher bezeichneter Wärmetauscher zugeordnet ist, um eine Erwärmung von in dem Wassertank 11 befindlichem Brauchwasser zu ermöglichen (Fig. 3). Anhand der Fig. 3 ist in dem Wassertank 11 ein Füllstand des Wassers erkennbar. Oberhalb der nicht näher bezeichneten Füllstandslinie befindet sich Luft. Aus dem Wassertank 11 ist eine Kaltwasserleitung K und eine Warmwasserleitung W abgeleitet. Zur Frostkontrolle ist der Kaltwasserleitung K und der Warmwasserleitung W ein temperaturabhängig öffnendes Steuerventil C zugeordnet, das bei niedriger Umgebungstemperatur des Freizeit-Fahrzeugs selbständig öffnet, um Frostschäden an der Wasserbaugruppe vorzubeugen. Optional kann über das Steuerventil auch manuell Wasser abgelassen werden. Das Steuerventil C dient zudem als Überdruckventil für die Wasserbaugruppe, wobei vorliegend ein Maximaldruck von 4,5 bar nicht überschritten werden kann.

Der Wasserbaugruppe ist zudem ein Lüftungsventil 6 zugeordnet, das bei Entleeren des Wassertanks 11 Luft in den Wassertank 11 strömen lässt, damit dieser vollständig auslaufen kann. Das Belüftungsventil 6 weist eine Sperrkugel auf, die bei einem Befüllen des Wassertanks 11 mit Wasser schließt. Bei einem Ablassen von Wasser öffnet die Sperrkugel im Belüftungsventil 6 und ermöglicht die Zufuhr von Luft in den Wassertank 11. Hierzu ist an das Belüftungsventil 6 eine Belüftungsleitung vorgesehen, die vorliegend einen flexiblen Belüftungsschlauch 7 aufweist, der mit dem Belüftungsventil 6 verbunden ist. Die Belüftungsleitung führt durch den Fahrzeugboden B hindurch nach unten zur Fahrzeugumgebung, wie nachfolgend näher beschrieben wird.

Dem Gehäuse ist zudem eine Drainageleitung zugeordnet, die dazu dient, etwa in der Gehäuseunterschale 3 sich ansammelnde Leckage aus dem Gehäuse 3 und aus dem Fahrzeuginneren abzuführen. Die Drainageleitung schließt in einem Bodenbereich der Unterschale 3 des Gehäuses an einem Gehäuseauslass 9, d.h. einem Ablauf, an die Unterschale 3 an und wird ebenfalls durch den Fahrzeugboden B hindurch nach unten abgeleitet, wie nachfolgend näher beschrieben wird. Dabei weist die Drainageleitung einen flexiblen Drainageschlauch 8 auf, der an den bodenseitigen Gehäuseauslass 9 der Unterschale 3 angeschlossen ist.

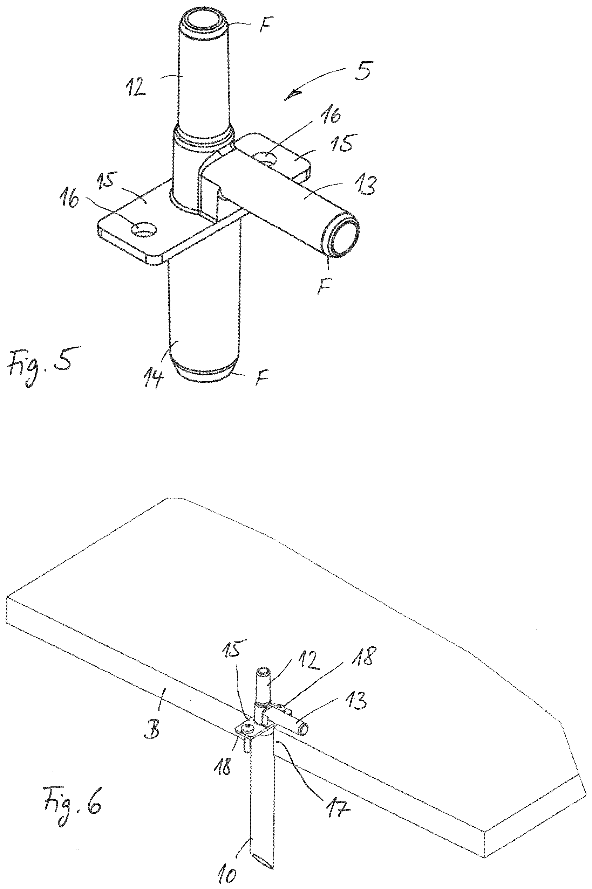

Um sowohl die Belüftungsleitung als auch die Drainageleitung durch den Fahrzeugboden B hindurchzuführen, ist im Fahrzeugboden ein Durchtritt 17 (Fig. 6) vorgesehen, in dem eine anhand der Fig. 4 bis 6 näher dargestellte Bodendurchführung 5 montiert ist. Die Bodendurchführung 5 ist als einteilige Armatur ausgeführt. Die Armatur weist zwei Anschlussstutzen 12 und 13 sowie einen Ablaufkanal 14 auf. Der eine Anschlussstutzen 12 dient zur Fortsetzung der Belüftungsleitung, der andere Anschlussstutzen 13 dient zur Fortsetzung der Drainageleitung. Demzufolge sind der Belüftungsschlauch 7 auf den Anschlussstutzen 12 und der Drainageschlauch 8 auf den Anschlussstutzen 13 aufgesteckt. Sowohl der Anschlussstutzen 12 als auch der Anschlussstutzen 13 sind als im Wesentlichen hohlzylindrische Stutzenabschnitte eines aus Kunststoff bestehenden Armaturgehäuses der einstückigen Armatur der Bodendurchführung 5 ausgebildet. Der Begriff "hohlzylindrisch" bzw. "zylindrisch" soll dabei auch zylindrische Formen mit fertigungstechnisch bedingten leichten Abweichungen (insbesondere im einstelligen Gradbereich) umfassen wie beispielsweise Entformschrägen, die zur Entnahme aus einer Spritzgussform vorgesehen sein können. Im betriebsfertig montierten Zustand, wie er anhand der Fig. 1, 2 und 6 erkennbar ist, ist der Anschlussstutzen 12 in Fahrzeughochrichtung ausgerichtet, so dass der Belüftungsschlauch 7 von oben her auf einen Außenmantel des Anschlussstutzens 12 aufgeschoben ist. Der Anschlussstutzen 13 für den Drainageschlauch 8 ragt orthogonal dazu ab, so dass sich zwischen den beiden Anschlussstutzen 12 und 13 eine rechtwinklige Ausrichtung ergibt. Beide Anschlussstutzen 12 und 13 weisen an ihren eingangsseitigen Stirnenden, auf die der Belüftungsschlauch 7 bzw. der Drainageschlauch 8 aufgeschoben wird, jeweils eine umlaufende Fase F auf, so dass ein einfaches und beschädigungsfreies Aufstecken des Belüftungsschlauchs 7 und des Drainageschlauchs 8 ermöglicht ist. Dabei sind entsprechende Innendurchmesser des Belüftungsschlauchs 7 und des Drainageschlauchs 8 so gewählt, dass korrespondierende Außendurchmesser des Anschlussstutzens 12 und des Anschlussstutzens 13 gegenüber diesen Innendurchmessern ein Übermaß aufweisen. Dadurch ist ein zuverlässiges Klemmen des Belüftungsschlauchs 7 und des Drainageschlauchs 8 in aufgeschobenem Zustand auf die Anschlussstutzen 12 und 13 gewährleistet. Eine zusätzliche Sicherung mittels jeweils einer Schlauchschelle ist möglich, aber nicht notwendig.

Das Armaturgehäuse der Bodendurchführung 5 setzt sich von einer Mündung des Anschlussstutzens 13 aus in koaxialer Verlängerung des Anschlussstutzens 12 nach unten fort in einen Ablaufkanal 14, dessen Durchflussquerschnitt D₃ gegenüber Leitungsquerschnitten D₁ des Anschlussstutzens 13 und D₂ des Anschlussstutzens 12 erweitert ist. Die Erweiterung des Durchflussquerschnitts D₃ des Ablaufkanals 14 setzt bereits an einem unteren Mündungsende des vertikalen Anschlussstutzens 12 knapp oberhalb eines inneren Mündungsendes des Leitungsquerschnitts D₁ des Anschlussstutzens 13 an. Die Erweiterung ist durch eine Ringstufe R erzeugt. Zudem erweitert sich der Durchflussquerschnitt D₃ des Ablaufkanals 14 zu einem strömungsseitigen Ende hin konisch, wie Fig. 4 gut zu entnehmen ist. Ein Außenumfang des Ablaufkanals 14 ist zylindrisch ausgeführt, wobei ein Außendurchmesser des Ablaufkanals 14 gegenüber den Außendurchmessern der Anschlussstutzen 12 und 13 vergrößert ist. Auch der Ablaufkanal 14 weist an seinem ausgangsseitigen Stirnende eine umlaufende Fase F auf. Im betriebsfertig montierten Zustand ist bei dem dargestellten Ausführungsbeispiel auch auf den Ablaufkanal 14 ein Ablaufschlauch 10 aufgesteckt, wie anhand der Fig. 1, 2 und 6 erkennbar ist.

Eine Länge des Ablaufkanals 14 ist größer als eine Länge der Anschlussstutzen 12 und 13. Im betriebsfertig montierten Zustand ist der Ablaufkanal 14 vollständig in Fallrichtung ausgerichtet, d. h. koaxial zu einer Fahrzeughochachse und damit auch koaxial zu dem Anschlussstutzen 12.

Der Durchtritt 17 in dem Fahrzeugboden B ist als zylindrische Bohrung ausgeführt, deren Durchmesser wenigstens dem Außendurchmesser des Ablaufkanals 14 und vorzugsweise einem Außendurchmesser des Ablaufschlauchs 10 entspricht.

Die Armatur der Bodendurchführung 5 ist in geringem Abstand unterhalb des Anschlussstutzens 13 - auf den betriebsfertig montierten Zustand bezogen - mit einem Befestigungsabschnitt versehen, der als Auflageflansch 15 ausgebildet ist. Der Auflageflansch 15 ist beim dargestellten Ausführungsbeispiel einstückig an der Armatur der Bodendurchführung 5 vorgesehen. Der Auflageflansch 15 weist zwei zu gegenüberliegenden Seiten in einer Radialebene zu einer Mittellängsachse der Armatur erstreckte Laschenbereiche auf, wobei jeder Laschenbereich jeweils ein zylindrisches Befestigungsloch 16 aufweist, das jeweils eine parallel zur Mittellängsachse der Armatur erstreckte Befestigungsachse definiert. Durch die Befestigungslöcher 16 hindurch werden für die Montage der Bodendurchführung 5 Schraubverbindungen 18 geführt, die den Auflageflansch 15 auf einer Oberseite des Fahrzeugbodens B in einem Randbereich um den Durchtritt 17 herum befestigen. Der Auflageflansch 15 ist derart unterhalb des Anschlussstutzens 13 positioniert, dass im betriebsfertig montierten Zustand (Fig. 6) der Armatur der Anschlussstutzen 13 in Abstand oberhalb der Oberseite des Fahrzeugbodens B positioniert ist, um ein einfaches Aufschieben oder Abziehen des Drainageschlauchs 8 zu ermöglichen.

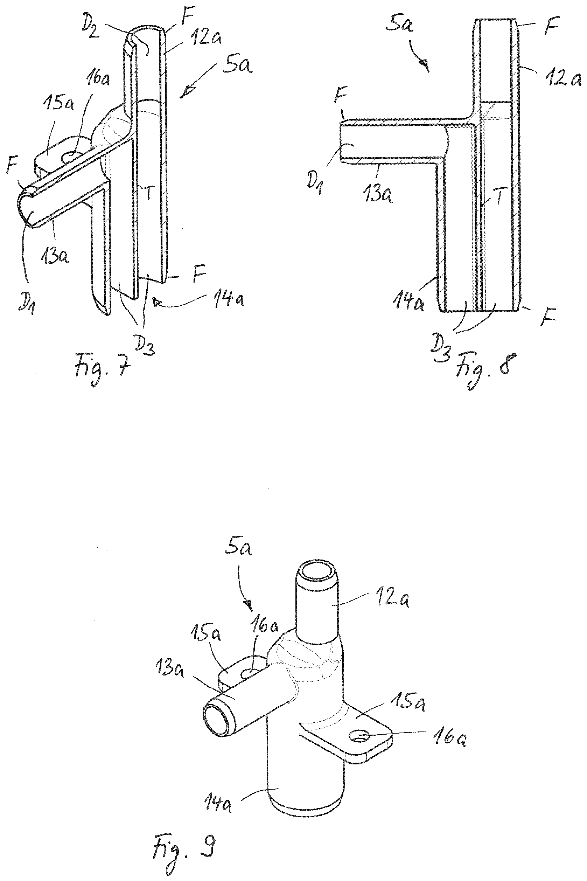

Anhand der Fig. 7 bis 9 ist eine weitere Bodendurchführung 5a dargestellt, die in gleicher Weise bei dem Heizsystem 1 gemäß den Fig. 1 bis 3 einsetzbar ist, wie dies bezüglich der Bodendurchführung 5 nach den Fig. 4 bis 6 der Fall ist. Die Bodendurchführung 5a wird in gleicher Weise funktional in das Heizsystem 1 eingebunden wie die Bodendurchführung 5. Zur Vermeidung von Wiederholungen wird daher auf die Beschreibung der Ausführungsform gemäß den Fig. 1 bis 3 und 4 bis 6 Bezug genommen. Funktionsgleiche Abschnitte und Teile der Bodendurchführung 5a sind mit gleichen Bezugszeichen, teilweise unter Hinzufügung des Buchstabens a versehen. Nachfolgend wird auf die Unterschiede der Bodendurchführung 5a gemäß den Fig. 7 bis 9 eingegangen.

Die Bodendurchführung 5a ist ebenfalls als einstückiges Armaturgehäuse ausgeführt, wie dies bei der Bodendurchführung 5 der Fall ist. Die beiden Anschlussstutzen 12a für den Belüftungsschlauch 7 einerseits und 13a für den Drainageschlauch 8 andererseits sind ebenfalls zylindrisch ausgeführt mit gleichen Außendurchmessern. Zudem sind beide Anschlussstutzen 12a und 13a orthogonal zueinander ausgerichtet, wobei der Anschlussstutzen 12a im betriebsfertig montierten Zustand in Fahrzeughochrichtung und der Anschlussstutzen 13a orthogonal dazu ausgerichtet ist. Wesentlicher Unterschied der Armatur der Bodendurchführung 5a ist es, dass die Leitungsquerschnitte D₁ und D₂ der Anschlussstutzen 13a und 12a nicht in einen gemeinsamen Ablaufkanal münden, sondern der Ablaufkanal 14a in zwei Kanalabschnitte getrennt bleibt. Dabei führt ein Kanalabschnitt die Drainageleitung des Anschlussstutzens 13a fort und der andere Kanalabschnitt die Belüftungsleitung des Anschlussstutzens 12a. Beide Kanalabschnitte ergeben gemeinsam einen gemeinsamen Durchflussquerschnitt D₃, wobei jeder Kanalabschnitt des Ablaufkanals 14a über eine gesamte Länge des Ablaufkanals 14a mittels einer Trennwand T von dem jeweils anderen Kanalabschnitt getrennt bleibt. Der Ablaufkanal 14a ist demzufolge mittels seines gesamten Durchflussquerschnitts D₃ ebenfalls erweitert gegenüber den Leitungsquerschnitten D₁ und D₂ der beiden Anschlussstutzen 12a und 13a. Die Belüftungsleitung und die Drainageleitung bleiben jedoch über die gesamte Erstreckung der Armatur der Bodendurchführung 5a voneinander getrennt. Anhand der Fig. 7 und 9 ist zudem erkennbar, dass das Armaturgehäuse der Bodendurchführung 5a an einem unteren Ende des Anschlussstutzens 12a ausgebaucht ist, so dass der Ablaufkanal 14a auf seinen gesamten Strömungsquerschnitt D₃ bezogen nicht koaxial zum Anschlussstutzen 12a, sondern vielmehr parallel versetzt zu diesem nach unten verläuft. Der Leitungsquerschnitt D₁ des Anschlussstutzens 13a geht mittels einer rechtwinkligen Umlenkung über in den Teilquerschnitt des anhand der Fig. 8 linken Kanalabschnitts. Der Leitungsquerschnitt D₂ des Anschlussstutzens 12a geht knapp oberhalb des Anschlussstutzens 13a stufenartig in die Ausbauchung des in Fig. 8 rechten Kanalabschnitts des Ablaufkanals 14a über.

An dem Armaturgehäuse der Bodendurchführung 5a ist in gleicher Weise ein Befestigungsabschnitt mit einem Auflageflansch 15a vorgesehen wie bei der Bodendurchführung 5, der durch zwei zu gegenüberliegenden Seiten hin laschenförmig abragende, einstückig angeformte Abschnitte gebildet ist. An beiden Abschnitten ist jeweils ein Befestigungsloch 16a vorgesehen, durch das hindurch in gleicher Weise wie bei der Ausführungsform nach den Fig. 4 bis 6 Befestigungselemente in Form von Schraubverbindungen, jeweils mit Kopfschrauben, hindurchgeführt werden können, um die Bodendurchführung 5a im Bereich des Durchtritts 17 auf dem Fahrzeugboden B zu befestigen. Beide Anschlussstutzen 12a und 13a wie auch der Ablaufkanal 14a weisen zudem stirnendseitig jeweils eine umlaufende Fase F auf, wie das auch bei der Bodendurchführung 5 gemäß den Fig. 4 bis 6 der Fall ist.

## Patentansprüche

1. Heizsystem (1) für ein Fahrzeug, insbesondere ein Caravan-Fahrzeug, mit einer Wasserbaugruppe zur Temperierung von Brauchwasser, die einen mit einer Belüftungseinrichtung versehenen Wassertank (11) aufweist, wobei die Belüftungseinrichtung eine in fahrzeugseitig montiertem Zustand durch einen Fahrzeugboden (B) nach außen in eine Fahrzeugumgebung geführte Belüftungsleitung aufweist, sowie mit einer Drainageleitung, die in fahrzeugseitig montiertem Zustand durch einen Durchtritt (17) in dem Fahrzeugboden (B) nach außen in die Fahrzeugumgebung hindurchgeführt ist, wobei die Drainageleitung und die Belüftungsleitung mit einer Bodendurchführung (5, 5a) verbunden sind, um Leckagen aus dem Fahrzeug auszuleiten und/oder den Wassertank (11) zu belüften, wobei die Bodendurchführung (5, 5a) eine Armatur mit zwei Anschlussstutzen (12, 13; 12a, 13a) für zwei Leitungen aufweist, die abliegend zu den Anschlussstutzen (12, 13; 12a, 13a) einen in betriebsfertig montiertem Zustand mit einer Fallrichtungskomponente ausgerichteten Ablaufkanal (14, 14a) aufweist, wobei der Ablaufkanal (14, 14a) einen gegenüber einem Leitungsquerschnitt (D₁, D₂) eines Anschlussstutzens (12, 13; 12a, 13a) erweiterten Durchflussquerschnitt (D₃) aufweist, und wobei ein Anschlussstutzen (12, 12a) koaxial oder parallel zu einer Hochachse der Armatur und der andere Anschlussstutzen (13, 13a) orthogonal zu der Hochachse ausgerichtet sind.

2. Heizsystem (1) nach Anspruch 1, wobei die Armatur außenseitig mit wenigstens einem Befestigungsabschnitt (15, 15a) versehen ist, um die Armatur an oder in dem Durchtritt (17) des Fahrzeugbodens (B) zu fixieren.

3. Heizsystem (1) nach Anspruch 2, wobei als Befestigungsabschnitt ein auf einen Rand des Durchtrittes (17) des Fahrzeugbodens (B) aufsetzbarer Auflageflansch (15, 15a) vorgesehen ist, der in aufgesetztem Zustand mittels wenigstens eines Befestigungselementes, insbesondere mittels wenigstens einer Schraubverbindung (18), an dem Fahrzeugboden (B) befestigbar ist.

4. Heizsystem (1) nach einem der vorhergehenden Ansprüche, wobei die Armatur als einstückiges Kunststoffgehäuse gestaltet ist.

5. Heizsystem (1) nach einem der vorhergehenden Ansprüche, wobei der Durchflussquerschnitt (D₃) des Ablaufkanals (14) zu einem von den Anschlussstutzen (12, 13) entfernten Stirnendbereich, insbesondere konisch, erweitert ist.

6. Heizsystem (1) nach einem der Ansprüche 1 bis 4, wobei der Ablaufkanal (14a) zwei voneinander getrennte, parallel zueinander verlaufende Kanalabschnitte aufweist, in die die Leitungsquerschnitte (D₁, D₂) der Anschlussstutzen (12a, 13a) münden.

7. Heizsystem (1) nach einem der vorhergehenden Ansprüche, wobei Stirnenden der Anschlussstutzen (12, 13; 12a, 13a) und des Ablaufkanals (14, 14a) jeweils mit einer umlaufenden Fase (F) versehen sind.

8. Heizsystem (1) nach einem der vorhergehenden Ansprüche, wobei der Ablaufkanal (14, 14a) fluchtend zu dem Anschlussstutzen (12, 12a) ausgerichtet ist, der koaxial oder parallel zur Hochachse der Armatur erstreckt ist.

9. Heizsystem (1) nach einem der vorhergehenden Ansprüche, wobei ein Anschlussstutzen (13, 13a) der Armatur, mit dem die Drainageleitung verbunden ist, in fahrzeugseitig montiertem Zustand in Hochrichtung unterhalb eines Einlasses der Drainageleitung positioniert ist.

10. Heizsystem (1) nach einem der vorhergehenden Ansprüche, wobei der Wassertank (11) in einem Gehäuse untergebracht ist, an dem der Einlass der Drainageleitung (Gehäuseauslass (9)) in einem Bodenbereich des Gehäuses montiert ist.

11. Heizsystem (1) nach Anspruch 9, wobei die Drainageleitung und die Belüftungsleitung zumindest abschnittsweise durch flexible Schläuche gebildet sind, deren Innendurchmesser kleiner ist als ein Außendurchmesser des jeweiligen Anschlussstutzens (12, 13; 12a, 13a) der Armatur.

12. Heizsystem (1) nach einem der vorhergehenden Ansprüche, wobei ein flexibler Schlauch auf das Stirnende des Ablaufkanals (14, 14a) aufgesteckt ist, wobei ein Innendurchmesser des Schlauchs kleiner ist als ein Außendurchmesser des Stirnendes des Ablaufkanals (14, 14a).

## Claims

1. Heating system (1) for a vehicle, in particular a caravan vehicle, having an assembly for water which is used for controlling the temperature of service water and which has a water tank (11) which is provided with a ventilation device, wherein the ventilation device has a ventilation line which, in a state fitted in the vehicle, is led outwards into vehicle surroundings through a vehicle floor (B), and having a drainage line which, in a state fitted in the vehicle, is led outwards into the vehicle surroundings through a passage (17) in the vehicle floor (B), wherein the drainage line and the ventilation line are connected to a floor lead-through (5, 5a) in order to conduct leakage out of the vehicle and/or to ventilate the water tank (11), wherein the floor lead-through (5, 5a) has a fitting with two connection pieces (12, 13; 12a, 13a) for two lines that, remote from the connection pieces (12, 13; 12a, 13a), has a discharge channel (14, 14a) which, in a state fitted ready for operation, is oriented so as to have a drop-direction component, wherein the discharge channel (14, 14a) has a throughflow cross section (D₃) which is widened in comparison with a line cross section (D₁, D₂) of a connection piece (12, 13; 12a, 13a), and wherein one connection piece (12, 12a) is oriented coaxially or parallel with respect to a vertical axis of the fitting and the other connection piece (13, 13a) is oriented orthogonally with respect to the vertical axis.

2. Heating system (1) according to Claim 1, wherein the fitting is provided at the outer side with at least one fastening portion (15, 15a) in order for the fitting to be fixed at or in the passage (17) of the vehicle floor (B).

3. Heating system (1) according to Claim 2, wherein provision is made as a fastening portion of a bearing flange (15, 15a) which is able to be mounted onto a periphery of the passage (17) of the vehicle floor (B) and which, in the mounted state, is able to be fastened to the vehicle floor (B) by means of at least one fastening element, in particular by means of at least one screw connection (18).

4. Heating system (1) according to one of the preceding claims, wherein the fitting is designed as a one-piece plastic housing.

5. Heating system (1) according to one of the preceding claims, wherein the throughflow cross section (D₃) of the discharge channel (14) widens, in particular conically, to an end-face region that is remote from the connection pieces (12, 13).

6. Heating system (1) according to one of Claims 1 to 4, wherein the discharge channel (14a) has two channel portions which are separate from one another and extend parallel to one another and into which the line cross sections (D₁, D₂) of the connection pieces (12a, 13a) open out.

7. Heating system (1) according to one of the preceding claims, wherein end faces of the connection pieces (12, 13; 12a, 13a) and of the discharge channel (14, 14a) are provided in each case with a circumferential bevel (F).

8. Heating system (1) according to one of the preceding claims, wherein the discharge channel (14, 14a) is oriented aligned with the connection piece (12, 12a) which extends coaxially or parallel with respect to the vertical axis of the fitting.

9. Heating system (1) according to one of the preceding claims, wherein one connection piece (13, 13a) of the fitting, to which the drainage line is connected, is, in a state fitted in the vehicle, positioned below an inlet of the drainage line in the vertical direction.

10. Heating system (1) according to one of the preceding claims, wherein the water tank (11) is accommodated in a housing at which the inlet of the drainage line (housing outlet (9)) is fitted in a base region of the housing.

11. Heating system (1) according to Claim 9, wherein the drainage line and the ventilation line are formed at least sectionally by flexible hoses whose inner diameter is smaller than an outer diameter of the respective connection piece (12, 13; 12a, 13a) of the fitting.

12. Heating system (1) according to one of the preceding claims, wherein a flexible hose is plugged onto the end face of the discharge channel (14, 14a), wherein an inner diameter of the hose is smaller than an outer diameter of the end face of the discharge channel (14, 14a).

## Revendications

1. Système de chauffage (1) pour un véhicule, notamment un véhicule de type caravane, avec un ensemble hydraulique pour la régulation en température de l'eau sanitaire, qui présente un réservoir d'eau (11) muni d'un appareil d'aération, l'appareil d'aération présentant une conduite d'aération qui, à l'état monté côté véhicule, est guidée vers l'extérieur dans un environnement du véhicule à travers un plancher de véhicule (B), ainsi qu'une conduite de drainage qui, à l'état monté côté véhicule, est guidée vers l'extérieur dans l'environnement du véhicule à travers un passage (17) dans le plancher de véhicule (B), la conduite de drainage et la conduite d'aération étant reliées à une traversée de plancher (5, 5a) afin d'évacuer les fuites hors du véhicule et/ou d'aérer le réservoir d'eau (11), la traversée de plancher (5, 5a) présentant un raccord avec deux tubulures de raccordement (12, 13 ; 12a, 13a) pour deux conduites, qui présente, à l'écart des tubulures de raccordement (12, 13 ; 12a, 13a), un canal d'écoulement (14, 14a) orienté avec une composante de direction de chute à l'état monté prêt à fonctionner, le canal d'écoulement (14, 14a) présentant une section de passage (D₃) élargie par rapport à une section transversale de conduite (D₁, D₂) d'une tubulure de raccordement (12, 13 ; 12a, 13a), et une tubulure de raccordement (12, 12a) étant orientée coaxialement ou parallèlement à un axe vertical du raccord et l'autre tubulure de raccordement (13, 13a) étant orientée orthogonalement à l'axe vertical.

2. Système de chauffage (1) selon la revendication 1, dans lequel le raccord est pourvu à l'extérieur d'au moins une section de fixation (15, 15a) afin de fixer le raccord sur ou dans le passage (17) du plancher de véhicule (B).

3. Système de chauffage (1) selon la revendication 2, dans lequel il est prévu en tant que section de fixation une bride d'appui (15, 15a) pouvant être placée sur un bord du passage (17) du plancher de véhicule (B), laquelle, à l'état mis en place, peut être fixée au plancher de véhicule (B) au moyen d'au moins un élément de fixation, notamment au moyen d'au moins une liaison vissée (18).

4. Système de chauffage (1) selon l'une quelconque des revendications précédentes, dans lequel le raccord est conçu sous forme de boîtier en plastique monobloc.

5. Système de chauffage (1) selon l'une quelconque des revendications précédentes, dans lequel la section transversale d'écoulement (D3) du canal d'écoulement (14) est élargie, notamment de manière conique, vers une zone d'extrémité frontale éloignée des tubulures de raccordement (12, 13).

6. Système de chauffage (1) selon l'une quelconque des revendications 1 à 4, dans lequel le canal d'écoulement (14a) présente deux sections de canal séparées l'une de l'autre, s'étendant parallèlement l'une à l'autre, dans lesquelles débouchent les sections transversales de conduite (D₁, D₂) des tubulures de raccordement (12a, 13a).

7. Système de chauffage (1) selon l'une quelconque des revendications précédentes, dans lequel les extrémités frontales des tubulures de raccordement (12, 13 ; 12a, 13a) et du canal d'écoulement (14, 14a) sont chacune pourvues d'un chanfrein périphérique (F).

8. Système de chauffage (1) selon l'une quelconque des revendications précédentes, dans lequel le canal d'écoulement (14, 14a) est orienté en alignement avec la tubulure de raccordement (12, 12a) qui s'étend coaxialement ou parallèlement à l'axe vertical du raccord.

9. Système de chauffage (1) selon l'une quelconque des revendications précédentes, dans lequel une tubulure de raccordement (13, 13a) du raccord, à laquelle est reliée la conduite de drainage, est positionnée, à l'état monté côté véhicule, dans la direction verticale en dessous d'une entrée de la conduite de drainage.

10. Système de chauffage (1) selon l'une quelconque des revendications précédentes, dans lequel le réservoir d'eau (11) est logé dans un boîtier sur lequel l'entrée de la conduite de drainage (sortie du boîtier (9)) est montée dans une zone de plancher du boîtier.

11. Système de chauffage (1) selon la revendication 9, dans lequel la conduite de drainage et la conduite d'aération sont formées au moins par sections par des tuyaux flexibles dont le diamètre intérieur est inférieur au diamètre extérieur de la tubulure de raccordement correspondante (12, 13 ; 12a, 13a) du raccord.

12. Système de chauffage (1) selon l'une quelconque des revendications précédentes, dans lequel un tuyau flexible est enfiché sur l'extrémité frontale du canal d'écoulement (14, 14a), un diamètre intérieur du tuyau étant inférieur à un diamètre extérieur de l'extrémité frontale du canal d'écoulement (14, 14a).
